# EUROPEAN PATENT SPECIFICATION

(11) **EP 4 511 339 B1**
(45) Date of publication and mention of the grant of the patent: **28.01.2026**
(21) Application number: 23720843.4
(22) Date of filing: 19.04.2023
(51) Int. Cl.: C04B 2/00, C04B 2/06, C04B 20/02, C04B 28/10

(54) **PROCESS FOR PRODUCING CALCINED MINERAL BINDER MATERIAL WITH REDUCED CARBON FOOTPRINT**
VERFAHREN ZUR HERSTELLUNG VON KALZINIERTEM MINERALISCHEM BINDEMATERIAL MIT REDUZIERTER KOHLENSTOFFBILANZ
PROCÉDÉ DE PRODUCTION D'UN MATÉRIAU LIANT MINÉRAL CALCINÉ À EMPREINTE CARBONE RÉDUITE

(30) Priority: 21.04.2022 EP 22169198
(43) Date of publication of application: 26.02.2025
(73) Proprietor: Sika Technology AG, 6340 Baar (CH)
(72) Inventor: JUILLAND, Patrick, 3005 Bern (CH); GALLUCCI, Emmanuel, 8048 Zürich (CH); FRUNZ, Lukas, 8305 Dietlikon (CH)
(74) Representative: Sika Patent Attorneys
(86) International application number: PCT/EP2023/060124
(87) International publication number: WO 2023/203072

(56) References cited:
- EP-A1- 2 559 472
- WO-A1-2014/154741
- US-A- 4 737 191

## Description

### Technical field

The invention is concerned with a method to produce a calcined mineral binder material. Furthermore, the invention is directed to a method for producing a settable mineral binder composition.

### Background art

In construction industry, a large amount of mineral binder based materials, such as e.g. mortar or concrete, is used. However, the production of cement and other mineral binders generates a considerable amount of carbon dioxide (CO₂), which is of relevance to the climate. In order to reduce carbon dioxide emissions, cement in binder compositions can be partly replaced by latent hydraulic and/or pozzolanic cement admixtures, as for example fly ashes, slags, or silica dust. Admixtures of this kind are byproducts of various industrial processes and are therefore advantageous in relation to the carbon dioxide balance. However, setting of cement admixtures of this kind, without additional measures, takes much longer than in the case of hydraulic cement.

A further problem is the disposal and recycling of demolition or construction waste comprising mineral binder based materials, such as e.g. hardened mortar or concrete.

Most of the demolition or construction waste, such as e.g. hardened concrete or mortar, still is disposed in landfills and only minor quantities are partially reused as raw material for low-tech applications in the construction industry. Usually, demolition waste material, e.g. concrete, is crushed and only the coarse fractions are being reused, the smaller ones being discarded due to compromising effect on the properties of fresh and hardened concrete. Therefore, current practice can only be considered incomplete and down-cycling.

However, demolition waste usually comprises significant amounts of useful constituents, e.g. aggregates or binder components, which can in principle be recycled completely and re-used for new construction works. Moreover, in certain regions and countries the disposal of construction waste has become more and more expensive and difficult due to new legislations. In Europe for example, the European directives require a reuse of at least 70 wt.-% of inert demolition. Thus, recycling of demolition or construction waste is an important issue.

In this regard, WO 2014/154741 A1 (Sika Technology AG) describes an improved method for retrieving aggregates and powdery mineral material from a source material comprising hardened mineral binder and aggregates, in particular a waste or demolition material. The method comprises the step of treating the source material in a disintegration process wherein the hardened mineral binder is at least partially, in particular essentially completely, carbonated with a carbon dioxide comprising gas and removed from the surface of the aggregates such that a powdery disintegration product is produced, which can be separated from the aggregates. The aggregates as well as the powdery disintegration product can be used for producing new mineral binder compositions.

EP2559472 A1 discloses a method for capturing carbon dioxide from an exhaust gas stream generated in the kiln of the cement manufacturing plant, wherein the solids comprising calcium oxide from the calciner are partly transferred to the carbonator. The method further comprises transferring solids comprising CaCO3 generated in a carbonation reaction, to be combined with cement raw material before the calcination reaction of the said solid material and the cement raw material to form calcium oxide, CaO. The calciner is operating at temperatures of 900°C.

However, there is still a need to develop improved solutions, which reduce carbon dioxide emissions in the construction industry.

### Disclosure of the invention

It is an object of the present invention to provide improved solutions for preparing mineral binder based materials having as few negative effects on the environment as possible. Especially the solution should allow for producing recycled mineral binders or mineral binder based materials having an improved carbon dioxide balance.

Surprisingly, it has been found that these objects can be achieved with the method according to claim 1. Specifically, the invention provides a method to produce a calcined mineral binder material comprising the steps of:
a) Providing a source material comprising a mineral binder material, carbonating the source material with carbon dioxide such that the mineral binder material is at least partially, in particular essentially completely, carbonated to obtain a carbonated product;
b) Calcining a carbonate-containing material to produce a calcined mineral binder material and carbon dioxide as side product;
whereby in step a) the carbon dioxide side product of step b), optionally in combination with further carbon dioxide from a different source, is used as the carbon dioxide for carbonation of the source material; and in step b) the carbonate-containing material comprises or consists of the carbonated product of step a), and additionally comprises a clay mineral mixed with the carbonated product obtained in step a) prior to the start of the calcination in step b) and optionally other material, and whereby calcination in step b) is effected at a temperature of 650 - 850°C.

The inventive method is based on a cyclic process in which carbon dioxide produced in the calcination reaction is converted to carbonate-containing material. Upon calcination of this material further carbon dioxide is obtained, which then is used again for producing carbonate-containing material. Thanks to this cyclic process comprising carbon dioxide looping, carbon dioxide does not need to be released to the environment.

Especially, the method allows for producing calcined mineral binder material, e.g. calcium oxide and/or calcium hydroxide that can be used to produce new settable mineral binder compositions. Thereby, carbon dioxide emissions can be significantly reduced and at the same time source material, such as e.g. waste or demolition material, can be recycled. Recycling allows inter alia for reducing the amount of waste or demolition material that has to be deposited or landfilled. Moreover, the consumption of natural resources, e.g. aggregates and raw material for cement production, can be reduced.

Also, the inventive method is highly flexible. For example, in step b), other (recycled) materials to be calcined, such as e.g. excavation material from quarries and/or mining, can be treated together with the carbonated product obtained in step a) or alone in the same manner and any carbon dioxide produced thereby can be reused for carbonating further source material in step a).

Thus, the invention provides for a highly beneficial combination of processes that allows for preparing mineral binder based materials having much less negative effects on the environment as compared to known production processes.

Additionally, both processes, i.e. steps a) and b), can be implemented well in one place with equipment and installations largely available on cement production plants. This further reduces engineering and transportation effort.

Steps a) and b) can be performed simultaneously or one after the other. In the latter case, the carbonated product produced in step a) can be stored temporarily before using it in step b). Likewise, the carbon dioxide side product produced in step b) can be stored temporarily before using it in step a). In case of a non-simultaneous implementation of steps a) and b), step b) might for example be performed right after step a) or at any time later.

Especially, for initiating the cyclic process, it is possible to use carbon dioxide from a different source exclusively in step a) in a first phase in order to produce a first quantity of carbonated product. The carbon dioxide from a different source can be further carbon dioxide as described below, such as e.g. carbons dioxide that is a by-product from an industrial process.

Likewise, for initiating the cyclic process, it is possible to use other carbonate-containing material, which does not comprise the carbonated product of step a) in a first phase in step b) exclusively in order to produce a first quantity of carbon dioxide.

In the present context, the term "source material" stands for any material comprising or consisting of mineral binder material. In particular, the source material comprises or consist of hardened mineral binder and/or uncured mineral binder.

The expression "hardened mineral binder" in particular refers to a mineral binder that has hardened in a chemical hydration reaction which produced hydrates. Preferably, the hardened mineral binder has hardened for at least 2 days, preferably at least 7 days, especially, at least 28 or at least 60 days.

In particular, the hardened mineral binder comprises or consists of hardened hydraulic binder, e.g. hardened cementitious binder. However, the hardened mineral binder can comprise or consist of hardened latent hydraulic and/or pozzolanic binder materials as well.

The term "latent hydraulic and/or pozzolanic binder materials" stands in particular for type II concrete additives with latent hydraulic and/or pozzolanic character according to EN 206-1. In particular, the latent hydraulic or pozzolanic binder material comprises or consists of slag, fly ash, silica fume, activated clays and/or natural pozzolanes.

In particular, the hardened mineral binder comprises or consists of 5 - 100 wt.-%, especially 50 - 100 wt.-%, more preferably, 65 - 100 wt.-%, of hardened hydraulic binder.

Especially, the hardened mineral binder comprises or consists of 5 - 95 wt.-% of hardened hydraulic binder and 95 - 5 wt.-% of hardened latent hydraulic and/or pozzolanic binder material. More preferably, the hardened mineral binder can comprise or consist of 30 - 90 wt.-% of hardened hydraulic binder and 70 - 10 wt.-% of hardened latent hydraulic and/or pozzolanic binder material.

Preferred hardened mineral binder comprise or consist of hardened cements of type CEM I, II, III, IV or V according to norm EN 197, in particular of type CEM I or II. However, other types of cements can be used as well.

In particular, the hardened hydraulic binder is hardened cement. Preferably, the hardened latent hydraulic and/or pozzolanic binder material is hardened slag and/or fly ash. A highly preferred hardened latent hydraulic binder material is hardened slag.

Especially, the source material to be treated comprises or consists of hardened mineral binder and aggregates.

Especially, the source material to be treated comprises or consists of hardened mineral binder bound to the surface of the aggregates. In particular, the hardened mineral binder at least partially encloses the aggregates and/or binds together several individual aggregates.

It is preferred that the calcined mineral binder material obtained in step b) of the present invention is not used as source material.

The term "aggregates" includes any type of mortar and/or concrete aggregates. In particular, the aggregates feature a density of 2.2 - 3.0 kg/dm³. Especially, the aggregates include stone, gravel, sand, or mixtures thereof. However, the aggregates may comprise or consist of lightweight aggregates, in particular foamed clay and/or polystyrene, or heavy aggregates, such as barite, iron ore and the like.

In particular, a grain size of the aggregates is at least 0.125 mm or at least 0.250 mm. Preferably, the grain size of the aggregates is at most 125 mm or at most 32 mm. Especially, the grain size of the aggregates is 0.125 - 125 mm, especially from 0.125 - 32 mm, in particular from 0.125 - 16 mm, for example from 0.125 - 8 mm or from 0.125 - 5 mm.

Within the present context, the grain size is determined by sieve analysis, in particular with sieves featuring square openings. Especially, the grain size is expressed by the opening size of the test sieves just passed by the grains or particles concerned.

Preferably, the source material comprises or consists of hardened mortar and/or concrete.

In particular, the source material is a demolition or waste material originating from demolished constructions or buildings. The source material may come from demolition sites and/or from landfills. Beside the hardened mineral binder, aggregates and/or further materials can be present in the source material. Further materials are for example metals, plastics and/or wood. However, it might be beneficial to at least partially separate such type of materials before treating the source material.

According to a preferred embodiment, the source material is crushed prior to step a). This is especially advantageous if the source material comprises hardened mineral binder. Crushing will increase the surface of the source material which in turn enhances the carbonation process.

"Uncured mineral binder" is meant to be mineral binder that has not yet hardened in a chemical hydration reaction. Thus, in this case, the mineral binder does not comprise hydrates. In particular, the uncured mineral binder comprises or consist of hydraulic, latent hydraulic and/or pozzolanic binder material as described above but being present in uncured state.

For example, the uncured mineral binder comprises or consist of cements of type CEM I, II, III, IV or V according to norm EN 197, in particular of type CEM I or II. However other types of cements can be used as well. Preferably, latent hydraulic and/or pozzolanic binder material is slag, fly ash, silica fume, activated clays and/or natural pozzolanes.

Especially, the uncured mineral binder comprises or consists of production waste of cement production. This is for example cement that, e.g. due to temporary processing issues, does not fulfil certain desired specifications.

As known to the skilled person, mineral binders, especially cements, apart from reacting with water, can be reacted with carbon dioxide thereby producing inter alia calcium carbonates. Thus, reacting uncured mineral binder as source material in step a) will at least partly carbonate the uncured mineral binder and result in a carbonated product, which can be calcined in step b) as well.

The term "carbonation" stands for a process, which is essentially the reversal of the chemical process of calcination which takes place for example in a cement kiln. In particular, "carbonation" means the incorporation of carbon dioxide into chemical compounds or the chemical reaction of carbon dioxide with the source material. Thus, "carbonation" stands in particular for a carbon dioxide treatment of the source material. To some extent, carbonation of hardened mineral binder, e.g. mortars or concrete, occurs naturally. However, here the term "carbonation" stands for a process in which the carbonation is specifically enhanced or accelerated compared to the natural process. This can be achieved by providing excess carbon dioxide.

The progress of carbonation can be measured, for example, by measuring the CO₂ partial pressure during step a) of a process according to the invention. If the CO₂ partial pressure drops, carbonation takes place. If the CO₂ partial pressure does not decrease further during the carbonation process, it can be assumed that carbonation is essentially complete. Alternatively, the progress of carbonation can also be determined, for example, by measuring the pH value of the mixture during the carbonation in step a) of a process according to the invention. If the pH value decreases carbonation is taking place. If the pH does not decrease further during the carbonation process, carbonation can be assumed to be essentially complete. This is usually the case at a pH value of 7 - 10, preferably 7 - 9.

For example, hardened mineral binder in the form of hydraulic cementitious material, which essentially consists of calcium, silicate, and aluminium hydrates, can react with carbon dioxide resulting in corresponding carbonates.

Basically, the microstructure of the hardened mineral binder or the binder matrix determines the rate of carbonation and the progress of a carbonation front from the exposed surface of the cementitious material towards its core. Because ingress of gases and liquids into hardened mineral binder material are heavily compromising its durability, mortars and concretes are preferably designed as impermeable as possible, i.e. to slow down natural carbonation to a minimum rate.

The carbon dioxide used in step a) comprises the carbon dioxide side product of step b). However, it might me mixed or replaced temporary with further carbon dioxide. The further carbon dioxide can for example be a product or by-product of any industrial process.

Preferentially, in step a) essentially pure carbon dioxide is used. A purity of the carbon dioxide is preferably > 1 wt.-%, for example > 8 wt.-%, preferably > 50 wt.-%, in particular > 95 wt.-%, especially > 99 wt.-%. With regard to the efficiency of the treatment, essentially pure carbon dioxide is most favourable.

However, mixtures of carbon dioxide with other substances, such as water vapour, nitrogen, and the like, e.g. air, can be used as well in step a). Such mixtures in particular comprise CO₂ in an amount > 1 wt.-%, for example > 8 wt.-%, preferably > 10 wt.-%, especially preferred > 50 wt.-%, in particular > 95 wt.-%, especially > 99 wt.-%. The concentration of CO₂ used is in particular beyond the CO₂ concentration of normal air.

According to a preferred embodiment, exhaust gas from an industrial process and/or a mixture of carbon dioxide with other substances is used as the further carbon dioxide for carbonation in step a). Advantageously the exhaust gas or the mixture comprises about 5 - 25 wt.-% CO₂, preferably 8 - 20 wt.-% CO₂ or 10 - 15 wt.-% CO₂.

The carbon dioxide can be added in gaseous form, in solid form or in liquid form. As well the further carbon dioxide used might be obtained from an in-situ decomposition of organic or inorganic substances, in particular carbonates, or from oxidation of carbon monoxide. Suitable carbonates are e.g. carbonate salts, alkene carbonates and the like.

Most preferred, the carbonation of the source material takes place in a liquid, and the carbon dioxide is added in gaseous form into the liquid. Thereby, the liquid is in particular an aqueous liquid, preferably water. This causes the carbon dioxide to dissolve in the aqueous liquid or water.

Preferably, a density of solid material, in particular source material and/or carbonated product, in the liquid, which is especially water, is about 10 - 80 vol.-%, especially 15 - 75 vol.-%, in particular 20 - 70 vol.-%, more preferably 30 - 65 vol.-% or 40 - 60 vol.-%. This results in an effective carbonation of the source material. In addition, if source material is subjected to mechanical force as described further below, under such conditions, effective abrasion, or attrition of the hardened mineral binder and/or carbonated material is induced. In other words, such concentrations result in highly abrasive conditions.

Especially, the carbon dioxide is added in gaseous form into the liquid such that bubbles are formed. Bubbles help to remove the carbonation products or the disintegration products from the surface of the aggregates.

Advantageously the treatment of the source material with carbon dioxide is conducted at atmospheric pressure. However, lower or higher pressures are possible as well.

The amount of carbon dioxide required for the treatment depends on the proportion of hardened binder present in the source material. The more hardened binder the more carbon dioxide is necessary.

Especially, the treatment takes place at a temperature between -10 - 100°C, especially between -5 - 75°C or 5 - 40°C. However, for example under humid conditions, the treatment may take place above 100°C.

In particular, the treatment of the source material is performed as long as new disintegration or carbonation products are formed. This means in particular, that the treatment is performed as long as significant or measurable amounts of new disintegration or carbonation products are formed.

Especially, the carbonated product produced in step a) comprises or consist of calcium, silicate and/or aluminum carbonates.

Especially preferred, in step a) the source material is carbonated under abrasive conditions, especially by mechanical abrasion and/or attrition. This is in particular true if the source material comprises or consists of hardened mineral binder material and optionally aggregates. Preferably, abrasive conditions are generated by mechanical force acting on the source material during carbonation in step a). Mechanical force will result in high granular friction, impact and abrasion or attrition of the source material.

In this case, a combined chemo-mechanical process is performed. This leads to an efficient disintegration of source material, especially if the source material comprises or consists of hardened mineral binder material. In this process the hardened mineral binder is disintegrated or decomposed, respectively, into a fine grain or powdery decomposition product. If the source material further comprises aggregates, e.g. if the source material is a hardened mortar or concrete composition, the hardened mineral binder is effectively removed from the surface of the aggregates in the source material. Thus, the surface of the aggregates can be cleaned of hardened binder material to a large extent. Therefore, the retrieved or recycled aggregates have a quality which is very close to neat aggregates.

In particular, in step a), hardened mineral binder and/or carbonated material is removed from the surface of aggregates, especially by mechanical abrasion and/or attrition. Removal is in particular effected by mechanical force acting on the source material. Mechanical force will result in high granular friction, impact and abrasion or attrition of the source material or the hardened mineral binder and/or carbonated material, respectively.

The mechanical force and/or abrasion may be induced by agitation of the source material. Thereby, the source material is for example confined in a defined volume and subjected to agitation. This will in particular induce high shear forces and abrasion or attrition.

Preferably, a density of solid material, in particular source material and/or carbonated material, in the processing volume is about 10 - 80 vol.-%, especially 15 - 75 vol.-%, in particular 20 - 70 vol.-%, more preferably 30 - 65 vol.-% or 40 - 60 vol.-%. The term "processing volume" stands for the volume where the mechano-chemical process is effectively carried out. In other words, the processing volume is defined to be the space in which the material to be treated, in particular the source material, is exposed to carbonation and/or abrasion and/or attrition.

In contrast, with densities below 10 vol.-% of solid material in the processing volume, the mechanical force or abrasion will in general be much less effective and removal of the hardened mineral binder and/or carbonated material from the surface of aggregates becomes more difficult. This is in particular due to the fact that under these conditions, the solid material in the liquid is rather far away separated. Consequently, most of the time there is hardly any mechanical contact produced between particles of the solid material.

In particular the material to be processed, in particular the source material, fills the processing volume according to the above densities, such that upon agitation of the material abrasive contacts between particles are imposed. For agitation and/or in order to induce abrasive conditions, a stirring device, a mechanical mixer, a rotating drum, a crusher, an extruder, ultrasound treatment, vibrating, fluid flow or combinations thereof may be used.

Especially, agitation of the source material leads to friction and abrasion of the source material and/or the carbonated material. In return, this will increase the carbonation rate. Overall, agitation and/or abrasion results in an improved throughput or efficiency of the whole disintegration process. Thus, the disintegration process in this case consists of the combination of (i) a chemical process, i.e. carbonation, which decomposes the source material, e.g. hardened mineral binder, and (ii) the disintegration of the carbonation products, and optionally the removal from the surface of aggregates. These two processes interact synergistically and accelerate the overall disintegration process significantly.

In particular, these two processes run simultaneously and iteratively until a desired degree of carbonation and/or removal is achieved or, if present, until essentially clean aggregates are obtained.

Specifically, due to disintegration of the carbonation products, and optionally the removal from the surface of the aggregates, uncarbonated mineral binder being present in lower layers is exposed step by step and chemically reacted in the carbonation process. This interplay between chemical and mechanical process is in particular very effective and results a high yield of carbonation and, if present, in very clean aggregates.

Especially preferred, in step a) a source material comprising hardened mineral binder and aggregates is (i) treated in a disintegration process, in particular under abrasive conditions as described above, wherein the hardened mineral binder is at least partially, in particular essentially completely, carbonated and removed from the surface of the aggregates such that a powdery disintegration product is produced; and (ii) the treated source material is separated at a predefined cut-off grain size in order to retrieve treated aggregates with a grain size of at least the predefined cut-off grain size and/or in order to retrieve powdery mineral material with a grain size below the predefined cut-off grain size. Thereby, the powdery mineral material with a grain size below the predefined cut-off grain size corresponds to the carbonated product of step a).

Thus, another advantage is the ease of separation of cleaned aggregates and the disintegration products upon carbonation of a source material comprising hardened mineral binder and aggregates. The microstructure of hardened mineral binder, especially hardened cementitious binder, consists of hydrate phases in the range of nanometres to micrometres. Through the disintegration process the disintegration products are present as fine grain or powdery products, with grain sizes ranging from nanometres to several micrometres. Typically, the grain size of the powdery disintegration product is in the range of 0 - 0.250 mm or 0 - 0.125 mm. This facilitates the separation of the disintegration products from the cleaned aggregates.

Especially, the powdery mineral material and the treated aggregates are separated at a characteristic cut-off grain size. Preferably the cut-off grain size is between 0.06 - 1 mm, especially, 0.1 - 0.5 mm, preferably at 0.125 mm or at 0.250 mm. This means that particles below the cut-off grain size are collected as powdery mineral material or the carbonated product, respectively, while particles with a size above the cut-off grain size are collected as aggregates.

The powdery mineral material comprises or consists of the powdery disintegration product. Optionally, the powdery mineral material may comprise small aggregates with a grain size below the cut-off grain size and/or untreated hardened mineral binder with a grain size below the cut-off grain size.

Separation of the powdery mineral material from the treated aggregates is in particular done by filtration, sieving, sedimentation, density separation and/or centrifugation.

Especially, if the treating of the source material is performed under abrasive conditions, it takes place in presence of water. The water can e.g. be present in the form of a gas and/or of a liquid.

Preferably, the treating of the source material takes place in a liquid, in particular in an aqueous liquid, preferably in water. This means that the source material is at least partially, in particular fully, immersed in the liquid.

However, it is also possible to carry out the treatment with wetted source material and/or under humid conditions. Humid conditions in particular means a relative humidity of 40 - 100%.

Especially, when using source material comprising hardened mineral binder and aggregates, the treatment in step a) is performed until an amount of hardened mineral binder and carbonated hardened mineral binder bound to the aggregates is 0.0001 - 50 wt.-%, in particular 0.001 - 25 wt.-%, especially 0.001 - 10 wt.-%, preferably 0.01 - 1 wt.-%, with respect to the overall weight of the aggregates.

In particular, the treatment in step a) is performed until a porosity, measured according to norm EN 1097-6, of the retrieved treated aggregates is ≤ 10 vol.-%, in particular ≤ 5 vol.-%, especially ≤ 2 vol.-%, preferably 0.1 - 3 vol.-% or 1 - 3 vol.-% 1.5 - 2 vol.-%.

The carbonating of the source material in step a) can be done in a batch process or in a continuous process.

According to a highly preferred embodiment, the source material can for example be immersed in an aqueous liquid, e.g. water, in a reaction vessel, e.g. with a concentration of 0.5 - 5 kg source material per liter of liquid, and treated with carbon dioxide under agitation or abrasive conditions. For example, the carbon dioxide can be introduced into the reaction vessel through an inlet which allows to introduce the carbon dioxide in gaseous form directly into the aqueous liquid. Thus, the gaseous carbon dioxide is dissolved in water and reacts with the hardened binder material under agitation and abrasive conditions in order to produce the disintegration product or powdery mineral material, respectively. Preferably the reaction vessel is agitated and/or comprises a mechanical stirrer for agitating the reaction mixture and effecting abrasive conditions. Separation of the powdery mineral material from the treated aggregates is then in particular done by filtration.

According to a preferred embodiment, the carbonated product and/or the aggregates obtained in step a) are dried after separation. This is especially useful, if the treatment has been performed under wet conditions or in a liquid.

Drying can e.g. be performed in an oven, in particular at a temperature of 30 - 150°C, preferably at 80 - 130°C or 100 - 120°C. As well, drying with the help of a stream of air, especially a stream of hot air, for example with a temperature of 30 - 150°C is a further option. This results in a fast drying of the carbonated product and/or the aggregates. However, it is for example also possible to dry the products under ambient conditions without further measures. This does not require any additional energy.

Especially, the carbonated product produced in step a) has a particle size below 250 µm, preferably below 125 µm. A fineness of the carbonated product is in particular in the range from 0.5 - 1000 m²/g, preferably 0.5 - 500 m²/g, especially 0.5 - 100 m²/g. The fineness refers to surface area calculated from nitrogen sorption (BET).

In particular, the carbonated product comprises or consists of carbonated hydrates of the cementitious hardened binder, optionally with remaining hydrates and/or oxides, e.g. quartz. Optionally aluminate products and/or sulphates may be present as well.

In particular, the carbonated product has the same oxide composition as the hardened binder and fractions of aggregates with a grain size below the cut-off grain size, e.g. below 250 µm or below 125 µm.

Clay minerals within the present context can be any type of clay containing materials, especially crude clays, low-temperature calcined clays, or high-temperature calcined clays. According to embodiments, the clay mineral is selected from crude clay, low-temperature calcined clay, and/or high-temperature calcined clay.

Crude clays are clay minerals extracted from e.g. a quarry, optionally purified and optionally dried. Low-temperature calcined clays are clays that have been thermally treated at temperatures between 500 - 1200°C. For example, low-temperature calcined clay minerals may be produced in a rotary kiln or in a flash calciner. High-temperature calcined clays are clay minerals that have been thermally treated at temperatures above 1200°C and typically between 1300 - 1400°C. High-temperature calcined clays typically are crystalline or contain high amounts of crystalline phases, especially of mullite.

According to embodiments, clay minerals of the present invention are crude clays, especially phyllosilicates. Especially the clay mineral comprises or consists of kaolinite, montmorillonite and/or illite, in particular kaolinite. These are clays that can be calcined and have proven to be suitable as components of mineral binders. However, other clay minerals might be suitable as well.

Clay minerals of the present invention may be pure clays or may contain other materials as impurities. According to some embodiments, the content of clay in clay minerals, especially in crude clay, is at least 30 w%, preferably at least 50 w%, more preferably at least 70 w%, especially at least 85 w%, relative to the dry weight of the crude clay.

According to further embodiments, clay minerals within the present context are low-temperature calcined clays, especially low-temperature calcined kaolinite. A suitable flash calcination process is for example described in WO 2014/085538. According to especially preferred embodiments of the present invention, the calcined clay is metakaolin. However, other clay mineral might be suitable as well.

A clay mineral may be added in the form of excavation material from quarries and/or mining or it can be added in pure form.

Preferably, a weight ratio of clay mineral to carbonated product is from 5:1 - 1:1, especially 2.5:1 - 1.5:1, in particular 2:1. Thereby, the weight of the clay mineral is with respect to the pure mineral without any impurities possibly present. This allows for example for producing mineral binder components for cements of type "LC³" comprising metakaolin, lime, cement, and gypsum.

In particular, the calcined mineral binder material produced in step b) comprises or consist of:
- calcium oxide;
- optionally aggregates, especially with a gran size below the above described cut-off grain size;
- calcined clay, especially metakaolin.

It is preferred that the calcined mineral binder material produced in step b) is fully calcined. In particular, the calcined mineral binder material produced in step b) is essentially free from any carbonate material, especially calcium carbonate. Essentially free means that such carbonate material is present in an amount of not more than 5 w%, preferably not more than 1 w%, relative to the dry weight of the calcined mineral binder material.

A composition with calcium oxide can for example be obtained if the source material is step a) is a hardened mortar, a hardened concrete and/or unreacted mineral binder, especially an unreacted cement. Thereby, in step a) a carbonated product comprising calcium carbonate is obtained, which then is calcined in step b) to produce calcium oxide as the calcined mineral binder material. Additionally aggregates originating in particular from the hardened mortar and/or concrete may be present. If in step a) a separation is performed as described above, the aggregates will in particular have a grain size below the cut-off grain size.

A composition further comprising calcined clay can be obtained if the carbonate-containing material used in step b) at least temporary comprises clay minerals, especially kaolinite, or a mixture of the carbonated product and clay minerals is used as the carbonate-containing material in step b).

It is preferred that the calcined mineral binder material obtained in step b) is not introduced as source material in step a).

The so obtained compositions can be used as mineral binders or components of mineral binder compositions. Thanks to the inventive method, the so produced compositions feature a significantly reduced carbon dioxide footprint.

Furthermore, the calcined mineral binder material can be subjected to a grinding procedure, especially to obtain a powder with a Blaine fineness measured according to DIN EN 196-6:2018 of at least 1'000 m²/g, in particular at least 2'500 m²/g, especially at least 3'500 m²/g. By grinding, the setting and hardening of the calcined mineral binder can be adjusted and the powders can for example be used as cement replacements, e.g. in construction work. Due to the use of the calcined mineral binder produced according to the inventive method, the carbon dioxide footprint of the construction work is reduced as well.

According to a further preferred embodiment, the calcined mineral binder material produced in step b) is partially hydrated, especially to convert calcium oxide to calcium hydroxide. Partial hydration can be performed before and/or after the above described grinding process. However, since the grinding process is optional, calcium hydroxide can be produced without any grinding as well. Similar to calcium oxide, calcium hydroxide can be used as mineral binder or as a component of mineral binder compositions.

Another aspect of the present invention is directed to a method for producing a settable mineral binder composition comprising the steps of (i) providing a mineral binder material as described above and (ii) mixing it with aggregates, a further mineral binder, water and/or at least one additive.

The further mineral binder, if present, in particular is chemically and/or physically different from the mineral binder material provided in step (i).

Aggregates are for example selected from gravel, sand and/or rock aggregates. Corresponding compositions can be formulated for example as mortar or concrete compositions.

Especially, the mineral binder composition in contains water, wherein a weight ratio of water to mineral binder can be in the range of 0.25-0.8, for example, 0.3-0.6, for example, 0.35-0.5. Such binder compositions can be processed directly as workable mortar or concrete compositions.

When omitting the addition of water in the above-mentioned method it is for example possible to produce dry mortar or concrete compositions.

Furthermore, the mineral binder composition may comprise at least one additive, for example, a concrete additive and/or a mortar additive. The at least one additive comprises, for example, a defoaming agent, a dye, a preservative, a plasticizer, a retarding agent, an air pore forming agent, a shrinkage reducing agent and/or a corrosion inhibitor or combinations thereof. Usually, such additives are present with a proportion of 0.0001 - 10 wt.%, with respect to the total weight of the mineral binder composition.

Further advantageous implementations of the invention are evident from the exemplary embodiments.

### Brief description of the drawings

The drawings used to explain the embodiments show:
- Fig. 1: A schematic illustration of an inventive process combining carbonation of a source material and calcination of so obtained carbonated products to produce a calcined mineral binder material with carbon dioxide looping;
- Fig. 2: A schematic illustration of additional process steps comprising grinding and partial hydration of the calcined mineral binder material produced in the method illustrated in Fig. 1.

### Exemplary embodiments

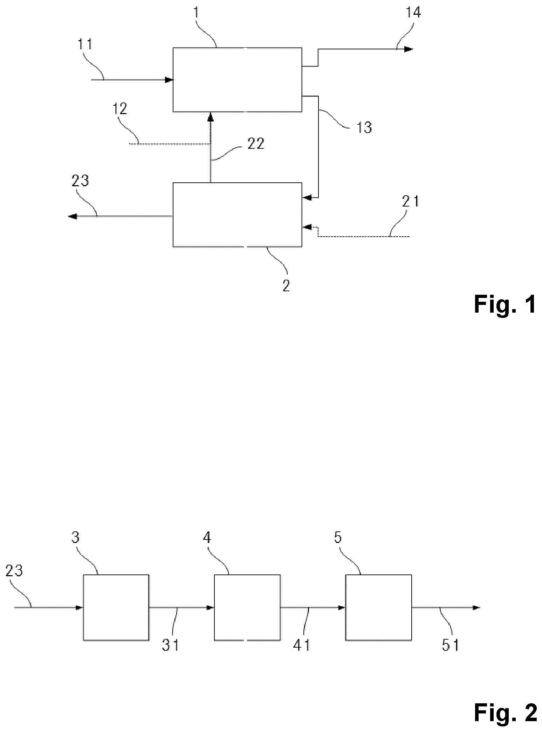

In the inventive process shown in Fig. 1, a source material 11, e.g. hardened concrete from demolition waste, is subjected to a carbonation treatment 1 with gaseous carbon dioxide 12, 22 (the source of carbon dioxide is explained below in more detail).

In the carbonation treatment 1, for example, 70 kg of crushed concrete was immersed in 30 I of water and treated in a mixing device (concrete mixer) under continuous mixing and continuous flow of gaseous carbon dioxide at a temperature of 20°C and atmospheric pressure. Thereby, pressurized carbon dioxide gas was introduced directly into the liquid water resulting in bubbles of carbon dioxide in the water that could be observed. During the treatment a continuous flow of water served to remove suspended carbonation products and small aggregate particles (= powdery mineral material) from the mixing device into a filtering system. In the filtering system, the turbid suspension containing carbonation products in the form of powdered fines and small aggregate particles was filtered with a filter of 125 µm opening size. Thus, small aggregates with a particle size of ≥ 125 µm were retained in the filter while smaller particles passed the filter with the water. Thereafter, the liquid suspension of the carbonated products was filtered once more in order to remove the water from the powdery mineral material. The process was stopped when the water directed to the filter system did not anymore comprise visible amounts of particles (clear solution, no visible turbidity) and the treated aggregates did not anymore comprise visible amounts of hydrated cement on their surface.

Subsequently, the so obtained aggregates 14 were removed from the concrete mixer and dried. The aggregates 14 can be used for example as recycled aggregates in new mineral binder compositions.

The powdery mineral material 13 (= carbonate-containing material) subsequently was subjected to a calcination treatment 2 at a temperature of for example 700°C in a cement kiln. Thereby calcined mineral binder material 23, consisting mainly of calcium oxide and small aggregates with a grain size below the cut-off grain size (= opening size of filter, i.e. 125 µm), as well as carbon dioxide side product 22 were produced.

In the carbonation treatment 1, carbonation is effected with the carbon dioxide side product 22 obtained in the calcination treatment 2. However, for initiating the process and as a supplement, carbon dioxide 12 from external sources, e.g. byproducts from other industrial processes, can be used temporary as well.

Also, the process shown in Fig. 1 allows for optionally mixing the powdery mineral material 13 with clay minerals 21, e.g. kaolinite, and subjecting the mixture to the calcination treatment 2. In this case, the calcined mineral binder material 23 consisted essentially of calcium oxide, calcined clay, e.g. metakaolin, small aggregates with a grain size below the cut-off grain size. This is for example of interest if the calcined mineral binder material 23 is intended for producing limestone calcined clay cement or cement of type LC³, respectively. Cement of type LC³ is a blended Portland cement consisting of cement clinker, calcined clay, limestone, and gypsum.

As illustrated in Fig. 2, the calcined mineral binder material 23 obtained after the calcination treatment 2 can be subjected to a grinding process 3, e.g. in a cement mill, to produce finely ground calcium oxide based binder material 31. For example, the finely ground calcium oxide based binder material is produced with a Blaine fineness of 3'500 m²/g and can be used as a (partial) cement replacement in mortar or concrete compositions.

In addition, if desired, the finely ground calcium oxide based binder material 31 can be further subjected to a hydration treatment 4 to partially covert calcium oxide to calcium hydroxide. Thereby, water can be added to the finely ground calcium oxide based binder material 31 in a proportion to hydrate the calcium oxide in dry state to keep it as a powder (= dry slaking).

The so obtained calcium hydroxide based binder material 41 consists essentially of calcium hydroxide, optionally calcined clay (e.g. metakaolin), and small aggregates with a grain size below the cut-off grain size.

If desired, the calcium hydroxide based binder material 41 is subjected to a further grinding process 5 to obtain a finely ground calcium hydroxide based binder material 51, e.g. with a Blaine fineness of 4'000 m²/g.

The binder materials 23, 31, 41, 51 produced with the inventive method can be used as components of mineral binders, which are for example used for producing new mortar or concrete compositions. Thereby, the carbon emissions are essentially zero since the carbon dioxide generated during calcination 2 can be fully consumed in the carbonation treatment 1 of the source material 11.

It will be appreciated by those skilled in the art that the present invention can be implemented in other specific forms without departing from essential characteristics thereof. The presently disclosed embodiments are therefore considered in all respects to be illustrative and not restricted.

For example, the hydration treatment 4 and the second grinding process 5 can be omitted, if the finely ground calcium oxide based material 31 is to be used as mineral binder component.

Likewise, the grinding process 3 can be omitted if the calcined mineral binder material 23 obtained after the calcination treatment 2 is fine enough to be directly hydrated in the hydration treatment 4.

### Practical Example

A carbonated mineral binder material was produced in a wet method as described in WO 2014/154741 (page 18 lines 2-29; the dried powdery mineral material corresponding to the carbonated mineral binder material). This carbonated product was mixed with kaolinite in a mass ratio of kaolinite to carbonated product of 2:1 and 5:1 respectively. The mix of kaolinite and carbonated product was calcined for 2h at a predefined temperature as indicated in below table 1. The target temperature was achieved within 1h from start of heating in all cases. Samples were then cooled to room temperature in the furnace. The composition of materials before and after calcination were determined by x-ray diffraction (XRD). Metakaolin is amorphous and as such not visible in XRD. However, the disappearance of peaks attributable to kaolinite and appearance of a broad hump typically observed for amorphous materials, show that metakaolin is formed during calcination. The main components are reported in below table 1. Thermal gravimetry showed that decarbonation mainly occurred at temperatures between 600 °C and 725 °C.

**Table 1: calcination products overview (only the examples in lines 4 and 5 of the table are according to the invention)**

| Kaolinite to carbonated product weight ratio | 2:1 | 5:1 |
|---|---|---|
| Start material, main components | Kaolinite, CaCO₃ | Kaolinite, CaCO₃ |
| Calcination at 600 °C, main components | Metakaolin, CaCO₃ | Metakaolin, CaCO₃ |
| Calcination at 700 °C, main components | Metakaolin, CaO, Ca(OH)₂ | Metakaolin, CaCO₃, CaO |
| Calcination at 800 °C, main components | Metakaolin, CaO, Ca(OH)₂ | Metakaolin, CaO |
| Calcination at 900 °C, main components | Metakaolin, CaO | Metakaolin, CaO |

The reactivity of the resulting calcined mineral binders was tested as follows.

The respective calcined mineral binder or start material was mixed with water in an amount to realize a water/binder ratio of 0.5. Mixing was then continued on a Heidolph propeller mixer for 1 min at 1000 rpm. All mixing procedures were done at 23°C and 50% r.h. Heat flow curves of the resulting mixes were measured in an isothermal process as described in standard ASTM C1702-17. Measurements were done with an instrument i-CAL 8000 from Calmetrix. The following table 2 summarizes the amount of heat released between 30 minutes and 20 hours after start of measurement of the respective samples. A positive value is indicative for a hydraulic and/or pozzolanic reaction.

**Table 2: results of heat flow measurements (only the examples in lines 4 and 5 of the table are according to the invention)**

| Kaolinite to carbonated product weight ratio | 2:1 | 5:1 |
|---|---|---|
| Start material, heat released [mW/g] | 61 | 35 |
| Calcination at 600 °C, heat released [mW/g] | 471 | 110 |
| Calcination at 700 °C, heat released [mW/g] | 683 | 295 |
| Calcination at 800 °C, heat released [mW/g] | 519 | 281 |
| Calcination at 900 °C, heat released [mW/g] | 340 | 262 |

## Claims

1. Method to produce a calcined mineral binder material comprising the steps of:
a) Providing a source material comprising a mineral binder material, carbonating the source material with carbon dioxide such that the mineral binder material is at least partially, in particular essentially completely, carbonated to produce a carbonated product;
b) Calcining a carbonate-containing material to produce a calcined mineral binder material and carbon dioxide as side product;
whereby in step a) the carbon dioxide side product of step b), optionally in combination with further carbon dioxide from a different source, is used as the carbon dioxide for carbonation of the source material; and in step b) the carbonate-containing material comprises the carbonated product of step a), and additionally comprises a clay m neral mixed with the carbonated product obtained in step a) prior to the start of the calcination in step b), and
whereby calcination in step b) is effected at a temperature of 650 - 850°C.

2. Method according to claim 1, whereby a ratio of clay mineral to carbonated product is from 5:1 - 1:1, especially 2.5:1 - 1.5:1, in particular 2:1.

3. Method according to any of claims 1 - 2, whereby the clay mineral is selected from crude clay, calcined clay thermally treated at temperatures between 500 - 1200°C, and/or calcined clay thermally treated at temperatures above 1200°C.

4. Method according to any of claims 1 -3, whereby the clay mineral comprises kaolinite, montmorillonite and/or illite, especially kaolinite.

5. Method according to any of preceding claims, whereby in step a) the source material comprises hardened mineral binder and aggregates and whereby during carbonation the hardened mineral binder is at least partially removed from the surface of the aggregates.

6. Method according to any of claims 4 - 5, whereby the treated source material is separated at a predefined cut-off grain size in order to retrieve treated aggregates with a grain size of at least the predefined cut-off grain size and in order to retrieve a powdery mineral material with a grain size below the predefined cut-off grain size.

7. Method according to any of claims 1 - 5, whereby the source material comprises hardened mortar and/or concrete.

8. Method according to any of claims 1 - 5, whereby the source material comprises uncured mineral binder.

9. Method according to any of preceding claims, whereby the carbonated product produced in step a) comprises or consist of calcium, silicate and/or aluminium carbonates.

10. Method according to any of preceding claims, whereby the calcined mineral binder material comprises or consist of:
- calcium oxide;
- calcined clay, especially metakaolin;
- optionally aggregates, especially with a grain size below the cut-off grain size.

11. Method according to any of preceding claims, whereby the calcined mineral binder material is partially hydrated to convert calcium oxide to calcium hydroxide.

12. Method according to any of preceding claims, whereby the calcined mineral binder material is subjected to a grinding procedure to obtain a powder with a Blaine fineness measured according to DIN EN 196-6:2018 of at least 1'000 m²/g, in particular at least 2'500 m²/g, especially at least 3'500 m²/g.

13. Method for producing a settable mineral binder composition comprising the steps of (i) providing a mineral binder material obtained in a method according to any of claims 1 - 12 and (ii) mixing it with one or more representatives of the group consisting of aggregates, a further mineral binder, water and additives.

## Patentansprüche

1. Verfahren zur Herstellung eines kalzinierten mineralischen Bindemittelmaterials, umfassend die Schritte:
a) Bereitstellen eines Ausgangsmaterials, das ein mineralisches Bindemittelmaterial umfasst, Carbonatisieren des Ausgangsmaterials mit Kohlendioxid, so dass das mineralische Bindemittelmaterial wenigstens teilweise, insbesondere im Wesentlichen vollständig, carbonatisiert wird, um ein carbonatisiertes Produkt herzustellen;
b) Kalzinieren eines carbonathaltigen Materials, um ein kalziniertes mineralisches Bindemittelmaterial und Kohlendioxid als Nebenprodukt herzustellen;
wobei in Schritt a) das Kohlendioxid-Nebenprodukt von Schritt b), gegebenenfalls in Kombination mit weiterem Kohlendioxid aus einer anderen Quelle, als Kohlendioxid zur Carbonatisierung des Ausgangsmaterials verwendet wird; und in Schritt b) das carbonathaltige Material das carbonatisierte Produkt von Schritt a) umfasst und zusätzlich ein Tonmineral, vor Beginn der Kalzinierung in Schritt b) gemischt mit dem in Schritt a) erhaltenen carbonatisierten Produkt, umfasst, und
wobei die Kalzinierung in Schritt b) bei einer Temperatur von 650-850 °C erfolgt.

2. Verfahren nach Anspruch 1, wobei ein Verhältnis von Tonmineral zu carbonatisiertem Produkt von 5:1-1:1, insbesondere 2.5:1-1.5:1, insbesondere 2:1, beträgt.

3. Verfahren nach einem der Ansprüche 1-2, wobei das Tonmineral ausgewählt ist aus Rohton, kalziniertem Ton, der bei Temperaturen zwischen 500 und 1200 °C wärmebehandelt ist, und/oder kalziniertem Ton, der bei Temperaturen über 1200 °C wärmebehandelt ist.

4. Verfahren nach einem der Ansprüche 1-3, wobei das Tonmineral Kaolinit, Montmorillonit und/oder Illit, insbesondere Kaolinit, umfasst.

5. Verfahren nach einem der vorstehenden Ansprüche, wobei in Schritt a) das Ausgangsmaterial gehärtetes mineralisches Bindemittel und Zuschlagstoffe umfasst und wobei bei der Carbonatisierung das gehärtete mineralische Bindemittel wenigstens teilweise von der Oberfläche der Zuschlagstoffe entfernt wird.

6. Verfahren nach einem der Ansprüche 4-5, wobei das behandelte Ausgangsmaterial mit einer vorgegebenen Ausschluss-Korngröße aufgetrennt wird, um behandelte Zuschlagstoffe mit einer Korngröße von wenigstens der vorgegebenen Ausschluss-Korngröße zu gewinnen und um ein pulverförmiges Mineralmaterial mit einer Korngröße unter der vorgegebenen Ausschluss-Korngröße zu gewinnen.

7. Verfahren nach einem der Ansprüche 1-5, wobei das Ausgangsmaterial gehärteten Mörtel und/oder Beton umfasst.

8. Verfahren nach einem der Ansprüche 1-5, wobei das Ausgangsmaterial ungehärtetes mineralisches Bindemittel umfasst.

9. Verfahren nach einem der vorstehenden Ansprüche, wobei das bei Schritt a) hergestellte carbonatisierte Produkt Calcium-, Silicat- und/oder Aluminiumcarbonate umfasst oder daraus besteht.

10. Verfahren nach einem der vorstehenden Ansprüche, wobei das kalzinierte mineralische Bindemittelmaterial umfasst oder besteht aus:
- Calciumoxid;
- kalzinierten Ton, insbesondere Metakaolin;
- gegebenenfalls Zuschlagstoffe, insbesondere mit einer Korngröße unter der Ausschluss-Korngröße.

11. Verfahren nach einem der vorstehenden Ansprüche, wobei das kalzinierte mineralische Bindemittelmaterial teilweise hydratisiert wird, um Calciumoxid in Calciumhydroxid umzuwandeln.

12. Verfahren nach einem der vorstehenden Ansprüche, wobei das kalzinierte mineralische Bindemittelmaterial einem Mahlverfahren unterzogen wird, um ein Pulver mit einer Blaine-Feinheit, gemessen nach DIN EN 196-6:2018, von wenigstens 1000 m²/g, insbesondere wenigstens 2500 m²/g, insbesondere wenigstens 3500 m²/g, zu erhalten.

13. Verfahren zur Herstellung einer härtbaren mineralischen Bindemittelzusammensetzung, umfassend die Schritte (i) Bereitstellen eines mineralischen Bindemittelmaterials, erhalten durch ein Verfahren nach einem der Ansprüche 1 bis 12, und (ii) Mischen davon mit einem oder mehreren Vertretern der Gruppe bestehend aus Zuschlagstoffen, einem weiteren mineralischen Bindemittel, Wasser und Zusatzstoffen.

## Revendications

1. Procédé de production d'un matériau de liant minéral calciné comprenant les étapes de :
a) fourniture d'un matériau source comprenant un matériau de liant minéral, carbonatation du matériau source avec du dioxyde de carbone de telle sorte que le matériau de liant minéral soit au moins partiellement, en particulier essentiellement complètement, carbonaté pour produire un produit carbonaté ;
b) calcination d'un matériau contenant du carbonate, pour produire un matériau de liant minéral calciné et du dioxyde de carbone en tant que produit secondaire ;
selon lequel, à l'étape a), le produit secondaire de dioxyde de carbone de l'étape b), éventuellement en combinaison avec du dioxyde de carbone supplémentaire provenant d'une source différente, est utilisé comme dioxyde de carbone pour la carbonatation du matériau source ; et à l'étape b), le matériau contenant du carbonate comprend le produit carbonaté de l'étape a), et comprend en outre un minéral d'argile mélangé avec le produit carbonaté obtenu à l'étape a) avant le début de la calcination à l'étape b), et
selon lequel la calcination à l'étape b) est effectuée à une température de 650 à 850 °C.

2. Procédé selon la revendication 1, dans lequel le rapport entre le minéral d'argile et le produit carbonaté est compris entre 5:1 et 1:1, notamment 2.5:1 et 1.5:1, en particulier de 2:1.

3. Procédé selon l'une quelconque des revendications 1 à 2, dans lequel le minéral d'argile est choisi parmi l'argile brute, l'argile calcinée traitée thermiquement à des températures comprises entre 500 et 1200 °C et/ou l'argile calcinée traitée thermiquement à des températures supérieures à 1200 °C.

4. Procédé selon l'une quelconque des revendications 1 à 3, dans lequel le minéral d'argile comprend de la kaolinite, de la montmorillonite et/ou de l'illite, notamment de la kaolinite.

5. Procédé selon l'une quelconque des revendications précédentes, selon lequel, à l'étape a), le matériau source comprend un liant minéral durci et des agrégats et selon lequel pendant la carbonatation, le liant minéral durci est au moins partiellement éliminé de la surface des agrégats.

6. Procédé selon l'une quelconque des revendications 4 à 5, selon lequel le matériau source traité est séparé à une taille de grain de coupure prédéfinie afin de récupérer des agrégats traités ayant une taille de grain d'au moins la taille de grain de coupure prédéfinie et afin de récupérer un matériau minéral pulvérulent ayant une taille de grain inférieure à la taille de grain de coupure prédéfinie.

7. Procédé selon l'une quelconque des revendications 1 à 5, selon lequel le matériau source comprend du mortier et/ou du béton durci.

8. Procédé selon l'une quelconque des revendications 1 à 5, selon lequel le matériau source comprend un liant minéral non durci.

9. Procédé selon l'une quelconque des revendications précédentes, dans lequel le produit carbonaté produit à l'étape a) comprend ou est constitué de carbonates de calcium, de silicate et/ou d'aluminium.

10. Procédé selon l'une quelconque des revendications précédentes, dans lequel le matériau de liant minéral calciné comprend ou est constitué de :
- oxyde de calcium ;
- argile calcinée, notamment métakaolin ;
- éventuellement agrégats, notamment ayant une taille de grain inférieure à la taille de grain de coupure.

11. Procédé selon l'une quelconque des revendications précédentes, selon lequel le matériau de liant minéral calciné est partiellement hydraté pour convertir l'oxyde de calcium en hydroxyde de calcium.

12. Procédé selon l'une quelconque des revendications précédentes, dans lequel le matériau de liant minéral calciné est soumis à une procédure de broyage pour obtenir une poudre ayant une finesse Blaine mesurée selon la norme DIN EN 196-6:2018 d'au moins 1000 m²/g, en particulier d'au moins 2500 m²/g, notamment d'au moins 3500 m²/g.

13. Procédé de production d'une composition de liant minéral durcissable comprenant les étapes de (i) fourniture d'un matériau de liant minéral obtenu dans un procédé selon l'une quelconque des revendications 1 à 12 et de (ii) mélange de celui-ci avec un ou plusieurs représentants du groupe constitué des agrégats, d'un autre liant minéral, de l'eau et des additifs.
